# EUROPEAN PATENT SPECIFICATION

(11) **EP 2 808 799 B1**
(45) Date of publication and mention of the grant of the patent: **23.05.2018**
(21) Application number: 12866459.6
(22) Date of filing: 24.01.2012
(51) Int. Cl.: G06F 13/00, H04L 29/08, H04L 12/24, G05B 15/02

(54) **EQUIPMENT MANAGEMENT DEVICE, EQUIPMENT MANAGEMENT METHOD, PROGRAM AND EQUIPMENT MANAGEMENT SYSTEM**
EINRICHTUNGSVERWALTUNGSVORRICHTUNG, EINRICHTUNGSVERWALTUNGSVERFAHREN, PROGRAMM UND EINRICHTUNGSVERWALTUNGSSYSTEM
DISPOSITIF, PROCÉDÉ ET SYSTÈME DE GESTION D'ÉQUIPEMENT ET PROGRAMME

(43) Date of publication of application: 03.12.2014
(73) Proprietor: Mitsubishi Electric Corporation, Tokyo 100-8310 (JP)
(72) Inventor: ISHIZAKA Taichi, Tokyo 100-8310 (JP); SUZUKI Shigeki, Tokyo 100-8310 (JP); ITO Takahiro, Tokyo 100-8310 (JP); KOMIYA Noriyuki, Tokyo 100-8310 (JP); KUROIWA Takeru, Tokyo 100-8310 (JP)
(74) Representative: Pfenning, Meinig & Partner mbB
(86) International application number: PCT/JP2012/051463
(87) International publication number: WO 2013/111272

(56) References cited:
- EP-A1- 2 031 541
- JP-A- H11 102 289
- JP-A- 2001 125 628
- JP-A- 2007 226 635
- JP-A- 2012 003 310
- US-A1- 2002 075 307

## Description

### Technical Field

The present disclosure relates to an equipment management device, equipment management method, program, and equipment management system.

### Background Art

Equipment management devices monitoring/controlling facility equipments such as air conditioners and lighting apparatuses installed in a facility are known.

Among such equipment management devices, those comprising a touch-panel display displaying the equipment state for the user (equipment administrator) and receiving operations from the user generally exist in the marketplace. Furthermore, many equipment management devices in which the display is embedded in a wall of the facility or on the control board are on the market as well.

The equipment administrators often work at their office desk. Therefore, it is difficult for an equipment administrator to constantly monitor an equipment management device installed on a wall or control board, and they sometimes overlook an abnormal event of a facility equipment or fail to immediately give an appropriate instruction to the facility equipment.

On the other hand, equipment management devices enabling management of facility equipments on a personal computer connected to the equipment management device via a LAN (local area network) or the like by displaying on the display of the personal computer a screen similar to the management screen displayed on the equipment management device are also known. However, in such a case, it is required to develop a web browser management screen complying with the version of the equipment management device in addition to the management screen displayed on the display of the equipment management device itself, which is a factor of increasing the development cost of the manufacturers.

Furthermore, the VNC (virtual network computing) and remote desktop system are known as techniques for displaying the screens retained in the server on the client as they are.

With the above techniques, as the server receives mouse input or other operation information from the client, the server creates new screen data for the client screen according to the received operation information and sends the screen data to the client. Then, the client switches the display to another screen or scrolls and displays an image based on the screen data received from the server. Therefore, with these techniques, each time the user operates the client, communication processing with the server occurs. Then, a problem is that it takes time to switch the screen displayed on the client or scroll and display an image.

Patent Literature 1 describes a technique for reducing the volume of communication between the server and client in a remote desktop system in order to solve the above problem.

More specifically, in the Patent Literature 1, the server saves image data sent to a client terminal in a table along with a characteristic value (for example, a hash value) of the image data. Then, for sending the image data to the client, the server determines whether the characteristic value of the image data is already saved in the table. If already saved, the server does not send the image data; the server sends only the characteristic value.

### Citation List

### Patent Literature

Patent Literature 1: Unexamined Japanese Patent Application Kokai Publication No. 2007-226635.

US 2002/075307A discloses that a graphical user Interface is used for the dynamic management of remote devices. In a Web-based computing environment, browsers are used to remotely access data from devices attached to computer systems. Through the graphical interface displayed on a monitor, the user interacts dynamically with the remote device.

### Summary of Invention

### Technical Problem

However, even with the remote desktop system described in the Patent Literature 1, like the prior art remote desktop system, communication processing between the server and client occurs each time the client is operated. More specifically, in the remote desktop system described in the Patent Literature 1, each time the client is operated, the client sends the operation information to the server and the server has to send to the client image data or a characteristic value of the image data based on the received operation information. Therefore, even with the remote desktop system described in the Patent Literature 1, some delay may occur in processing (connection processing and/or response confirmation processing) due to communication protocol as the client is operated, whereby it still possibly takes time to conduct processing such as an operation to switch the screen.

The present disclosure is invented with the view of the above situation and an exemplary objective of the present disclosure is to provide an equipment management device, equipment management method, program, and equipment management system that can improve the response of the management screens when operated by the user in comparison with the prior art.

### Solution to Problem

The invention is defined by the independent claims. Further embodiments are defined by the dependent claims.

### Advantageous Effects of Invention

The present disclosure can improve the response of the management screens when operated by the user in comparison with the prior art.

### Brief Description of Drawings

FIG. 1 is a diagram showing the configuration of the equipment management system according to Embodiment 1 of the present disclosure;
FIG. 2 is a diagram showing the configuration of the equipment management device;
FIG. 3A is an illustration showing an exemplary monitoring screen;
FIG. 3B is an illustration showing an exemplary schedule screen;
FIG. 3C is an illustration showing an exemplary state list screen;
FIGS. 4 is illustration for explaining the relationship between image data and scrolling image data;
FIG. 5 is an illustration showing an exemplary structure of the screen action table;
FIG. 6 is a diagram showing the configuration of the display terminal;
FIG. 7 is a flowchart for explaining the action in the start-up procedure executed by the equipment management device;
FIG. 8 is a flowchart for explaining the action in the screen update procedure executed by the equipment management device;
FIG. 9 is a flowchart for explaining the action in the screen data reception procedure executed by the display terminal;
FIG. 10 is a flowchart for explaining the action in the screen control procedure executed by the display terminal;
FIG. 11A is an illustration showing an exemplary structure of the image data in Embodiment 2 of the present disclosure;
FIG. 11B is an illustration showing an exemplary structure of the scrolling image data in Embodiment 2 of the present disclosure;
FIG. 12 is an illustration showing the relationship between image data and image layers;
FIG. 13 is an illustration showing the relationship between scrolling image data and scrolling image layers;
FIG. 14 is an illustration showing an exemplary structure of the screen action table;
FIG. 15 is a flowchart for explaining the action in the screen control procedure executed by the display terminal;
FIG. 16 is a diagram showing the configuration of the equipment management system according to Embodiment 3 of the present disclosure; and
FIG. 17 is a flowchart for explaining the action in the screen update procedure executed by the equipment management device.

### Description of Embodiments

Embodiments of the present disclosure will be described in detail hereafter with reference to the drawings. In the figures, the same or corresponding components are referred to by the same reference numbers.

### «Embodiment 1»

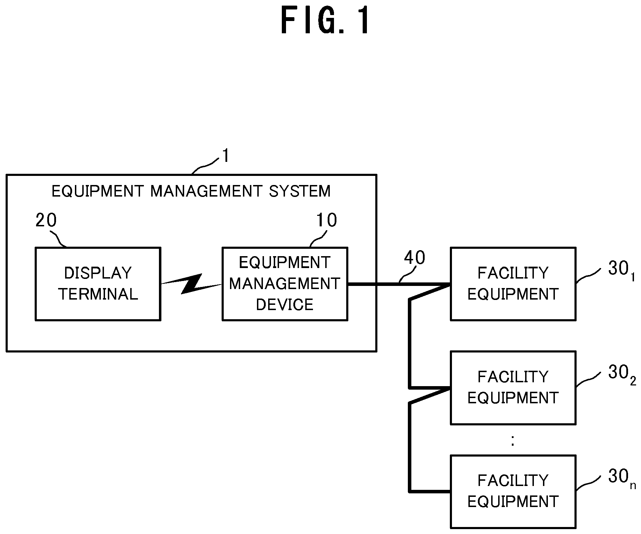

An equipment management system 1 according to Embodiment 1 of the present disclosure will be described. The equipment management system 1 is a system managing facility equipments installed in a facility. The equipment management system 1 comprises, as shown in FIG. 1, an equipment management device 10 and a display device 20.

The equipment management device 10 is connected to facility equipments 30₁ to 30ₙ, which are air conditioners and/or lighting apparatuses, via a dedicated communication line 40 and monitors/controls the facility equipments 30₁ to 30ₙ. In the following explanation, the facility equipments 30₁ to 30ₙ are referred to as the facility equipments 30 where they are not distinguished from each other. Furthermore, the equipment management device 10 wirelessly communicates with the display terminal 20, and transmits screen data for the screens for managing the facility equipments 30 (the management screens) and the like to the display terminal 20.

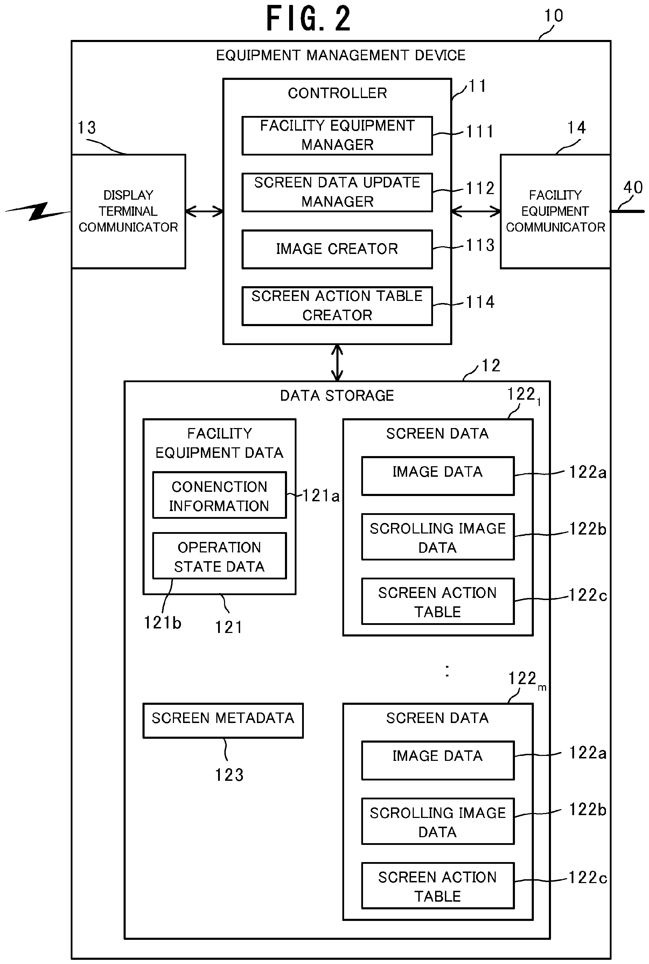

The equipment management device 10 is a computer comprising a CPU (central processing unit), a ROM (read only memory), a RAM (random access memory), a hard disc drive or a readable/writable semiconductor memory such as a flash memory, and a communication interface and the like. The equipment management device 10 functionally comprises, as shown in FIG. 2, a controller 11, a data storage 12, a display terminal communicator 13, and a facility equipment communicator 14.

The controller 11 controls the entire action of the equipment management device 10. The controller 11 comprises a facility equipment manager 111, a screen data update manager 112, an image creator 113, and a screen action table creator 114.

The facility equipment manager 111 manages the facility equipments 30. More specifically, the facility equipment manager 111 successively receives information presenting the operation states from the facility equipments 30 to monitor the operation states of the facility equipments 30. Furthermore, the facility equipment manager 111 controls the operation of the facility equipments 30 according to user instruction and/or given conditions. For example, the control of the facility equipment manager 111 includes detecting an abnormal event of the facility equipments 30 from the operation states of the facility equipments 30 and stopping the operation of the facility equipment 30 with which the abnormal event is detected.

The screen data update manager 112 updates (creates at the time of start-up of the equipment management device 10) the screen data for the management screens at given update times and transmits the updated screen data to the display terminal 20.

The image creator 113 creates images (image data 122a and scrolling image data 122b) to display on the management screens.

The screen action table creator 114 creates a screen action table for each management screen in which the content of an operation conducted on the management screen is associated with the content of an action due to the operation.

The data storage 12 stores various data necessary for the equipment management device 10 to manage the facility equipments 30. For example, the data storage 12 saves facility equipment data 121, screen data 122₁ to 122ₘ, and screen metadata 123.

The facility equipment data 121 are data regarding facility equipments to be managed. For example, the facility equipment data 121 saves connection information 121a and operation state data 121b.

The connection information 121a is fixed information necessary for identifying and accessing the facility equipments 30 such as ID information, address information, an operation group number, and model identification information of each facility equipment 30.

The operation state data 121b are data presenting the current operation states of the facility equipments 30 received from the facility equipments 30 (for example, operation mode such as in operation/at rest, cooling, or heating, set temperatures, room temperatures, and the like in the case of air conditioners). The facility equipment manager 111 periodically (for example, in every one minute) receives the operation state data 121b from the facility equipments 30 and updates the operation state data 121b saved in the facility equipment data 121 to the latest data.

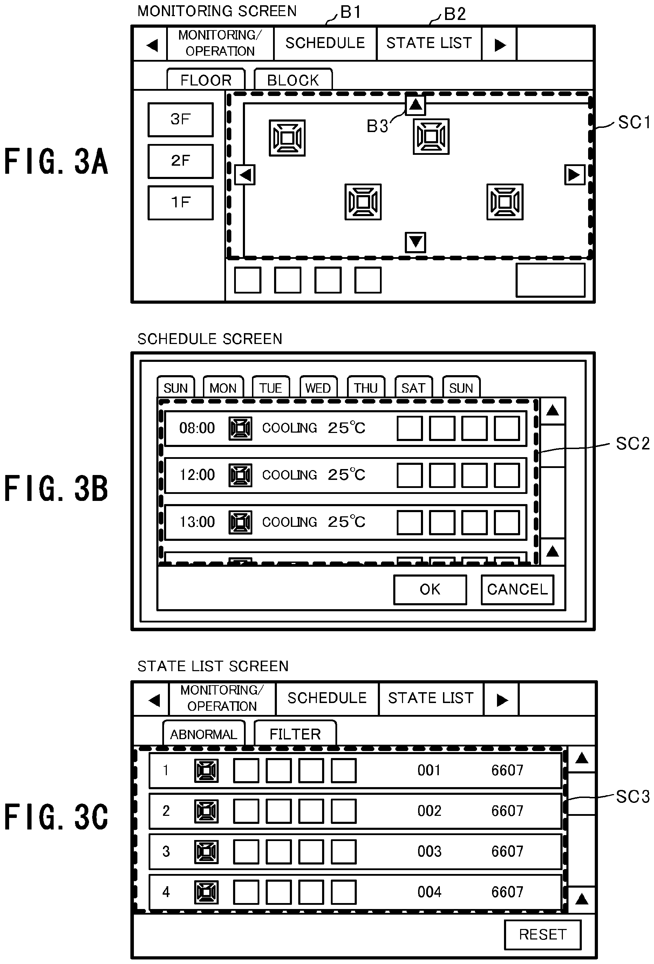

The screen data 122₁ to 122ₘ are data created for each management screen to be displayed on the display terminal 20 and defining the management screen. The management screens include, for example, a monitoring screen, schedule screen, and state list screen as shown in FIGS. 3A to 3C. In this embodiment, it is assumed that there are m management screens and the data storage 12 stores m screen data 122₁ to 122ₘ. Incidentally, the screen data 122₁ to 122ₘ are referred to as the screen data 122 where they are not distinguished from each other. Furthermore, the screen data 122 for the management screens are each given a screen ID with which a management screen is uniquely identifiable. The following explanation will be made on the assumption that the monitoring screen has a screen ID "S001," the schedule screen has a screen ID "S002," and the state list screen has a screen ID "S003." Furthermore, the screen data 122 comprises image data 122a, scrolling screen data 122b, and a screen action table 122c.

The image data 122a are image data of images to be displayed on management screens. The image data 122a are data in the format of, for example, GIF (graphics interchange format), JPEG (joint photographic experts group), BMP (bitmap), or the like.

The scrolling image data 122b are image data of images to be scroll-displayed within a given region (scroll region) on the management screens. For example, on the management screens shown in FIGS. 3A to 3C, regions SC1 to SC3 enclosed by dotted lines are scroll regions. The scrolling image data 122b are data in the format of, for example, GIF, JPEG, or BMP. Incidentally, when there are multiple scroll regions on a management screen, multiple scrolling image data 122b have to be retained.

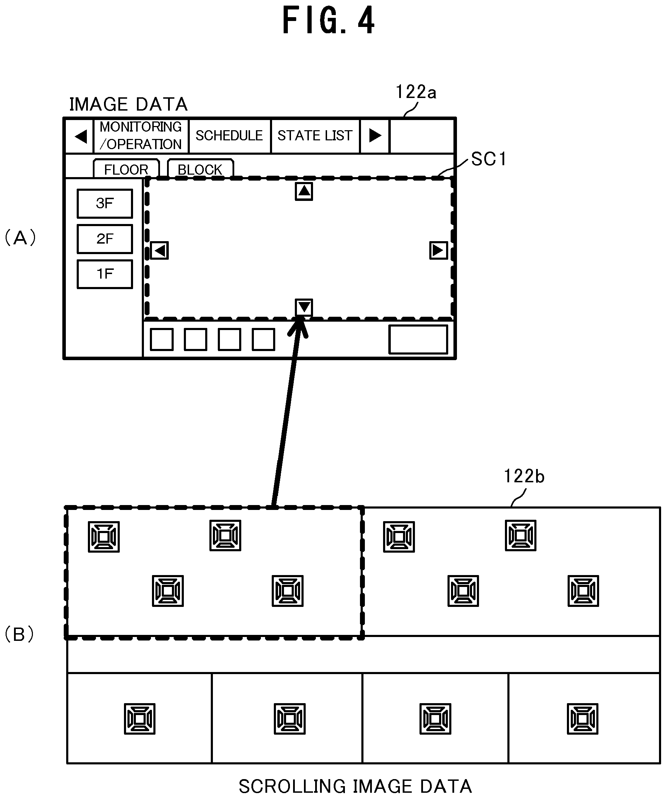

Here, the relationship between the image data 122a and scrolling image data 122b is explained using a specific example. (A) and (B) of FIG. 4 are illustrations showing the image data 122a and scrolling image data 122b of the monitoring screen shown in FIG. 3A. The scrolling image data 122b shown in (B) of FIG. 4 are partly scroll-displayed in the scroll region SC1 of the image data 122a shown in (A) of FIG. 4. Incidentally, in this case, the size of the scrolling image data 122b is approximately four times that of the scroll region SC1.

Returning to FIG. 2, the screen action table 122c is created by the screen action table creator 114. The screen action table creator 114 is a table associating the content of an operation conducted on the management screen with the content of an action due to the operation.

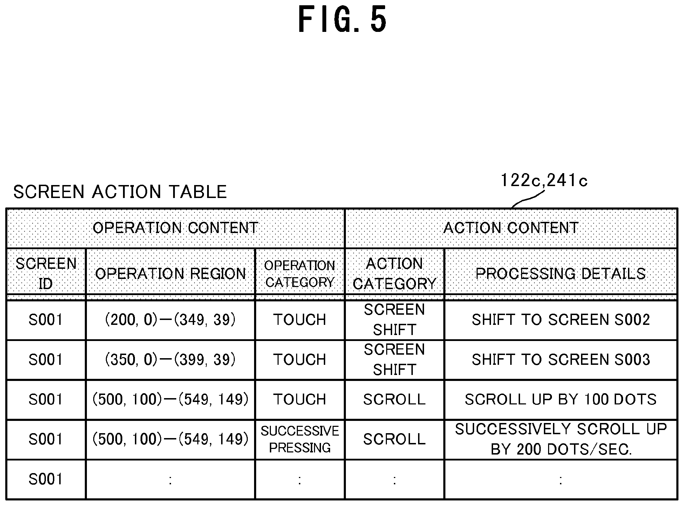

Here, the screen action table 122c is explained using a specific example. FIG. 5 is an illustration showing a part of the screen action table 122c corresponding to the monitoring screen shown in FIG. 3A. The screen action table 122c contains multiple entries of records in which the operation content comprising a screen ID, operation region, and operation category is associated with the action content comprising an action category and processing details.

The screen ID is identification information of the management screen. Since FIG. 5 shows the screen action table 122c corresponding to the monitoring screen, the screen action table 122c saves "S001" presenting the identification information of the monitoring screen.

The operation region presents the portion where an operation such as touching or clicking is conducted on the management screen. The operation region of the first entry in the screen action table 122c shown in FIG. 5 corresponds to the region of a schedule button B1 on the monitoring screen shown in FIG. 3A. Similarly, the operation region of the second entry corresponds to the region of a state list button B2 on the monitoring screen. Furthermore, the operation region of the third and fourth entries corresponds to the region of a scroll button B3 on the monitoring screen.

The operation category presents what type of operation is conducted in the operation region, such as "touching," "successive pressing," dragging," and "flipping with a finger."

The action category presents the type of action to be conducted as the operation presented by the operation content is conducted, such as "screen shift" and "scroll."

The processing details present what specific processing is executed in the above action.

For example, it can be known from the first entry in the screen action table 122c shown in FIG. 5 that as the schedule button B1 on the monitoring screen is touched, the display is shifted (switched) to the schedule screen having a screen ID "S002."

Furthermore, it can be known from the third entry that as the scroll button B3 on the monitoring screen is touched, the scrolling image data 122b are scrolled up by 100 dots.

Returning to FIG. 2, the screen metadata 123 are various data necessary for creating the management screens. The screen metadata 123 saves screen structure information presenting the positions of the buttons on the management screens, screen IDs, template images for creating the management screens, and the like.

The facility equipment communicator 14 comprises a communication interface for connecting to the dedicated communication line 40, and transmits/receives various data to/from the facility equipments 30 connected to the dedicated communication line 40.

The display terminal communicator 13 comprises a given wireless communication interface and transmits/receives data to/from the display terminal 20.

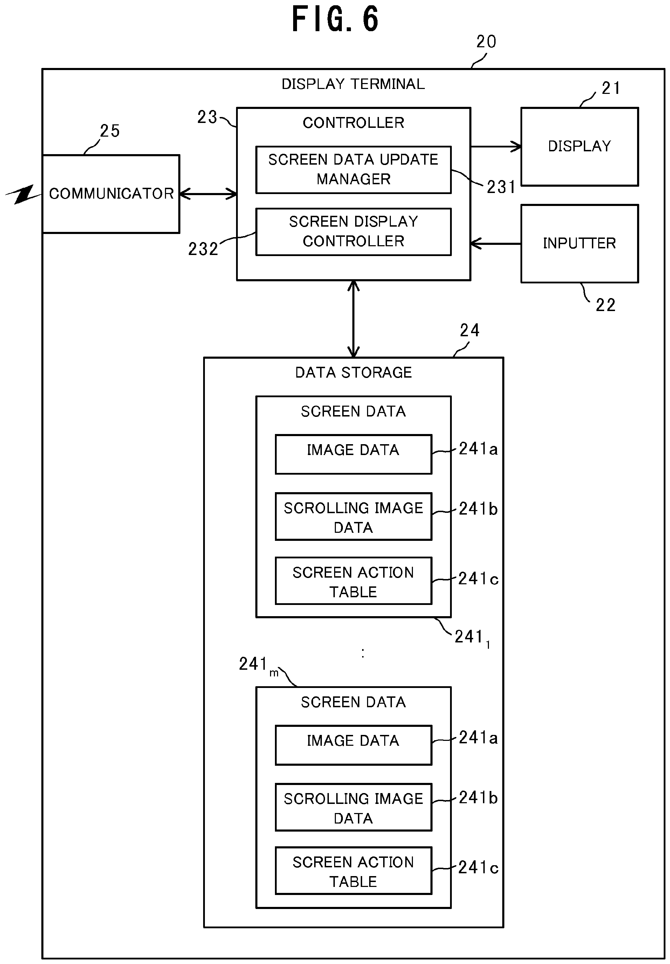

The display terminal 20 will be described hereafter. The display terminal 20 functions as the user interface of the equipment management system 1. The display terminal 20 communicates with the equipment management device 10 by means of a given wireless scheme, and displays the management screens for managing the facility equipments 30 based on the screen data received from the equipment management device 10. Furthermore, the display terminal 20 transmits instruction information entered by the user to the equipment management device 10. Thus, the equipment management device 10 controls the facility equipments 30. The display terminal 20 comprises, as shown in FIG. 6, a display 21, an inputter 22, a controller 23, a data storage 24, and a communicator 25.

The display 21 is a liquid crystal display or the like, and displays the management screens based on control from the controller 23.

The inputter 22 is an input device such as a touch panel and mouse. As the user operates the inputter 22 and touches or clicks on a management screen displayed on the display 21, the inputter 22 outputs to the controller 23 operation information presenting the coordinates of the position on the operated management screen and the operation type. Incidentally, if the inputter 22 is a touch panel, the inputter 22 is disposed on the display screen of the display 21.

The controller 23 controls the entire action of the display terminal 201. The controller 23 comprises a screen data update manager 231 and a screen display controller 232.

The screen data update manager 231 updates screen data 241₁ to 241ₘ stored in the data storage 24.

The screen display controller 232 controls the display of a management screen displayed on the display 21. For example, the screen display controller 232 shifts the managements screen or scroll-displays a scrolling image based on the operation information output from the inputter 22 and a screen action table 241c.

The data storage 24 stores screen data 241₁ to 241ₘ for the management screens on the basis of management screen. Each screen data 241 comprises image data 241a, scrolling image data 241b, and a screen action table 241c. Incidentally, the screen data 241 stored in the data storage 24 of the display terminal 20 are synchronized with the screen data 122 stored in the data storage of the equipment management device 10, and these data have the same contents.

The communicator 25 comprises a given wireless communication interface and transmits/receives data to/from the equipment management device 10.

The action of the equipment management system 1 will be described hereafter.

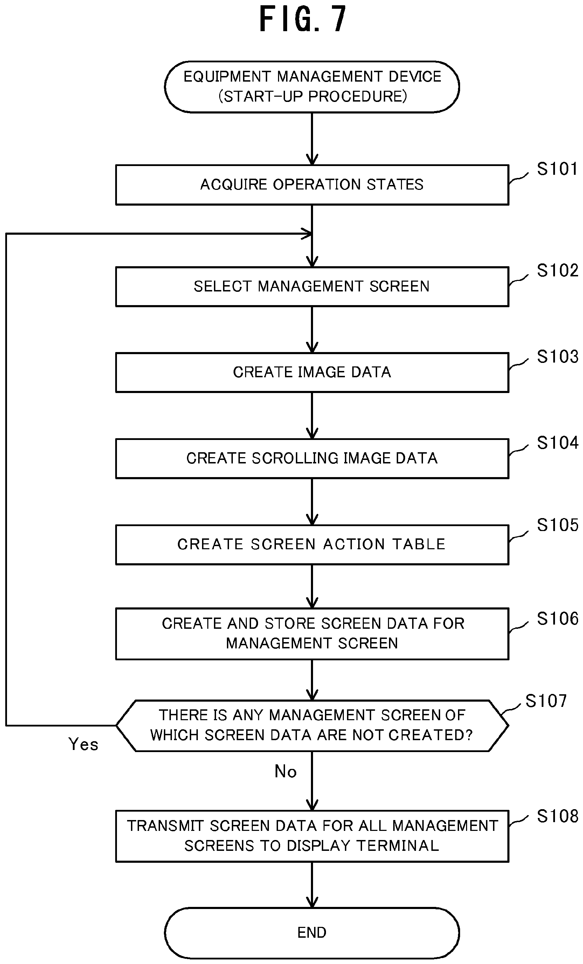

First, the action in the start-up procedure executed when the equipment management device 10 is started will be described using the flowchart of FIG. 7. Here, it is assumed that the equipment management device 10 does not know the operation states of the facility equipments 30 before the equipment management device 10 is started and therefore the screen data 122 for the management screens are not stored in the data storage 12.

As the user starts the equipment management device 10 by pressing down the start button or the like of the equipment management device 10, first, the facility equipment manager 111 makes reference to the connection information 121a in the facility equipment data 121, accesses the facility equipments 30, acquires the operation state data 121b presenting the operation states of the facility equipments 30, and stores the operation state data 121b in the facility equipment data 121 (Step S101). Incidentally, in the event that the facility equipments 30 have not been started (the power is off), it is possible that the facility equipment manager 111 starts the facility equipments 30 and then acquires the operation state data 121b.

Subsequently, the screen data update manager 112 creates the screen data 122 for the management screens. Incidentally, since the screen data 122 are not stored in the data storage 12 at this point of time, the screen data update manager 112 creates the screen data 122 for all management screens.

First, the screen data update manager 112 makes reference to the screen metadata 123 and identifies the management screens that have to be created. Then, the screen data update manager 112 selects one of the identified management screens for which no screen data are created yet (Step S102).

Subsequently, the screen data update manager 112 orders the image creator 113 to create image data for the selected management screen. Receiving the order, the image creator 113 creates the image data 122a with the addition of the operation state data 121b acquired in the Step S101 at a given position of a template image for the selected management screen (Step S103).

Subsequently, if the selected management screen contains a scroll region, the screen data update manager 112 orders the image creator 113 to create scrolling image data to display in the scroll region. Receiving the order, the image creator 113 creates the scrolling image data 122b with the addition of the operation state data 121b acquired in the Step S101 at a given position of the corresponding template image (Step S104).

Subsequently, the screen data update manager 112 orders the screen action table creator 114 to create a screen action table 122c for the selected management screen. Receiving the order, the screen action table creator 114 creates the screen action table 122c by analyzing the source codes stored in the data storage 12 in advance and describing the display action of the management screen or the like (Step S105). Incidentally, the screen action table 122c can be created and stored on a ROM or the like in advance before factory shipment of the equipment management device 10.

Subsequently, the screen data update manager stores the image data, scrolling image data, and screen action table 122c created in the Steps S103 to S105 in the data storage 12 as the screen data 122 for the selected management screen (Step S106).

Subsequently, the screen data update manager 112 determines whether there is any management screen for which the screen data 122 are not created yet (Step S107).

If there is any management screen for which no screen data are created (Step S107; Yes), the screen data update manager 112 selects that management screen and repeats the processing to create the screen data 122 (Steps S102 to S106).

If there is no management screen for which no screen data are created (Step S107; No), the screen data update manager 112 controls the display terminal communicator 13 to wirelessly transmit all created image data 122 to the display terminal 20 (Step S108). Then, the start-up procedure of the equipment management device 10 ends.

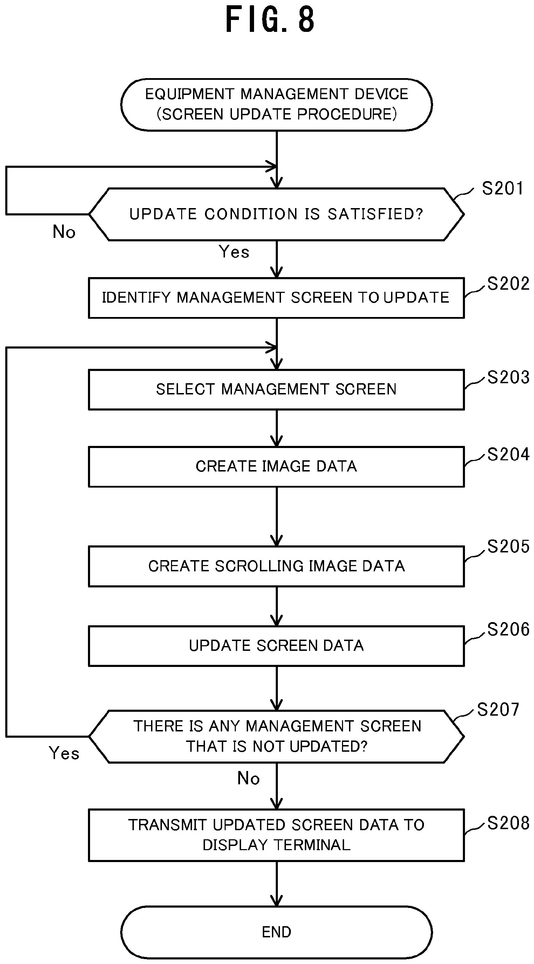

The screen update procedure executed by the equipment management device 10 when the screen data created in the start-up procedure have to be updated will be described hereafter using the flowchart of FIG. 8.

The screen data update manager 112 of the equipment management device 10 determines whether a given update condition is satisfied (Step S201). For example, the screen data update manager 112 may determine that an update condition is satisfied when the operation state data 121b changes from the currently retained value as a result of a facility equipment 30 being operated by the user or undergoing an abnormal event. Alternatively, the screen data update manager 112 may determine that an update condition is satisfied when a given length of time has elapsed or the date has changed.

If an update condition is satisfied (Step S201: Yes), the screen data update manager 112 identifies the management screens of which the display contents have to be updated (Step S202). For example, if an update condition is determined to be satisfied because the operation state data 121b has changed, the screen data update manager 112 identifies the management screens on which the changed operation state data 121b are displayed. Alternatively, if an update condition is determined to be satisfied because the date has changed, the screen data update manager 112 identifies the management screens on which the date is displayed.

Subsequently, the screen data update manager 112 selects one of the management screens identified in the Step S202 (Step S203).

Subsequently, the screen data update manager 112 creates new image data and scrolling image data for the selected management screen (Steps S204 and S205). Incidentally, this processing is substantially the same as the processing of the Steps S103 and S104 in the above-described start-up procedure.

Subsequently, the screen data update manager 112 updates the screen data 122 stored in the data storage 12 (Step S206). More specifically, the screen data update manager 121 updates the image data 122a and scrolling image data 122b in the screen data 122 stored in the data storage 122 and corresponding to the selected management screen to the image data 122a and scrolling image data 122b created in the Steps S204 and S205.

Subsequently, the screen data update manager 112 determines whether there is any management screen of which the screen data are not updated in the Step S206 among the management screens identified as having to be updated in the Step S202 (Step S207).

If there is any management screen of which the screen data are not updated (Step S207; Yes), the screen data update manager 112 selects that management screen and repeats the processing to update the screen data 122 (Steps S203 to S206).

If there is no management screen of which the screen data are not updated (Step S207; No), the screen data update manager 112 controls the display terminal communicator 13 to transmit only the screen data 122 updated in the Step S206 to the display terminal 20 (Step S208). Then, the screen update procedure ends.

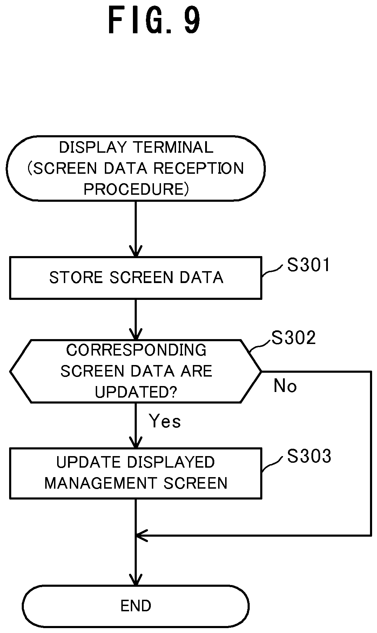

The procedure of the display terminal 20 upon reception of the screen data for the management screens from the equipment management device 10 (the screen data reception procedure) will be described hereafter with reference to the flowchart of FIG. 9.

Receiving the screen data 241 for the management screens from the equipment management device 10 via the communicator 25, the screen data update manager 231 of the display terminal 20 stores the received screen data 241 in the data storage 24 (Step S301). Incidentally, when the screen data 241 for the management screens are already stored in the data storage 24, the screen data update manager 231 updates the screen data 241 to the received screen data 241.

Subsequently, the screen data update manager 231 determines whether the screen data corresponding to the management screen displayed on the display 21 were updated in the processing of the Step S301 (Step S302). If not updated (Step S302; No), the screen update procedure ends.

If updated (Step S302; Yes), the screen data update manager 231 updates the management screen displayed on the display 21 based on the updated screen data 241 (Step S303). Then, the screen data reception procedure ends.

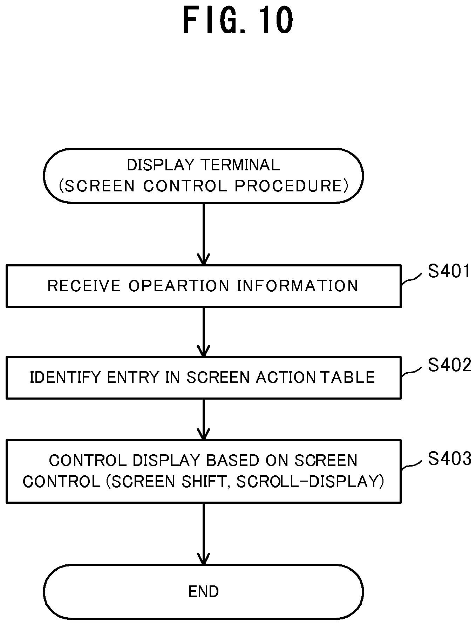

The screen control procedure when the user conducts an operation on the displayed management screen via the inputter 22 of the display terminal 20 will be described hereafter with reference to the flowchart of FIG. 10.

The user conducts an operation such as a touch or click on the management screen displayed on the display 21 via the inputter 22. In response to the operation, the inputter 22 sends to the screen display controller 232 operation information presenting the coordinates of the operated position on the management screen, the operation type (touch or click), and the like. Receiving the operation information from the inputter 22 (Step S401), the screen display controller 232 identifies an entry in the corresponding screen action table 241c based on the position coordinates and operation type presented by the operation information (Step S402). For example, when the screen action table 241c corresponding to the displayed management screen is constructed as shown in FIG. 5 and operation information presenting a touch on a position (300, 10) is received from the inputter 22, the screen display controller 232 identifies the first entry. Incidentally, if no entry is identified, it may be the case of a click on a portion that is not defined as an operation region in the screen action table 241c or the like. Then, the screen control procedure ends without conducting the subsequent processing.

Returning to FIG. 10, subsequently, the screen display controller 232 conducts control such as shifting the display of the management screen displayed on the display 21 to another management screen or scrolling the image within a scroll region (Step S403). For example, when the first entry in the screen action table 241c shown in FIG. 5 is identified, the screen display controller 232 switches the display to the management screen having the screen ID "S002." Then, the screen control procedure ends.

As described above, in the equipment management system 1 according to Embodiment 1 of the present disclosure, the equipment management device 10 transmits in advance to the display terminal 20 the images (image data 122a and scrolling image data 122b) created on the basis of management screen and the screen action table 122c defining the action corresponding to an operation on the management screens. Therefore, at the display terminal 20, when an operation is conducted on a management screen, the display terminal 20 can switch to a screen corresponding to the operation or scroll-display by itself by making reference to the screen action table 122c without accessing the equipment management device 10. Therefore, the equipment management system 1 can improve the response of the management screens when operated by the user in comparison with the prior art.

Furthermore, in the equipment management system 1 according to Embodiment 1, when the screen data for the management screens are updated by the equipment management device 10, only the updated screen data are transmitted to the display terminal 20 and the screen data stored in the display terminal 20 are similarly updated. Therefore, the latest information can be displayed on the management screens displayed on the display terminal 20 while reducing the volume of communication between the display terminal 20 and equipment management device 10.

Furthermore, with the prior art equipment management device integrated with a display and installed on a wall, a problem with the workability that the operator has to be standing and facing the wall to work and/or management errors such as overlooking an abnormal event due to the fact that the device is away from where the supervisor actually works (generally at his office desk) sometimes occur. On the other hand, in the equipment management system 1 according to Embodiment 1 of the present disclosure, the equipment management device 10 is separated from the display terminal 20 and it is possible to bring the display terminal 20 to the desk to monitor and control the facility equipments, whereby the problems of the prior art equipment management device can be solved.

Furthermore, in the equipment management system 1 according to Embodiment 1 of the present disclosure, the display terminal 20 does not need to execute the screen creation procedure on its own and can simply display the screen data and scrolling image data received from the equipment management device 10 as they are. Therefore, a high performance GUI (graphical user interface) executable environment does not need to be prepared for the display terminal 20, and the processing load is low, whereby a relatively inexpensive CPU can be used. Then, the display terminal 20 can be manufactured at low cost.

Furthermore, in the equipment management system 1 according to Embodiment 1 of the present disclosure, a GUI executable environment including the browser is unnecessary for the display terminal 20. The problem of the display action being altered depending on the version of the GUI executable environment including the OS (operation system), browser, and Java (registered trademark) applet does not occur in displaying the management screens on the screen of a personal computer.

Furthermore, in the equipment management system 1 according to Embodiment 1 of the present disclosure, even if the equipment management device 10 is configured to comprise a display, the management screens displayed on the display of the equipment management device 10 and the management screens displayed by the display terminal 20 are the same. Therefore, there is no need of creating management screens specific for the browser, as in the case of the browser screen of a personal computer being used for monitoring, whereby the labor of developing duplicated management screens can be eliminated.

### <<Embodiment 2>>

An equipment management system according to Embodiment 2 of the present disclosure will be described hereafter. The equipment management system according to Embodiment 2 of the present disclosure has substantially the same configuration as the equipment management system 1 according to Embodiment 1 except that the image data and scrolling image data for displaying the management screens are constructed by multiple layers of images. Here, substantially the same components as those of the equipment management device 10 and display terminal 20 according to Embodiment 1 are referred to by the same reference numbers and their explanation is omitted as appropriate.

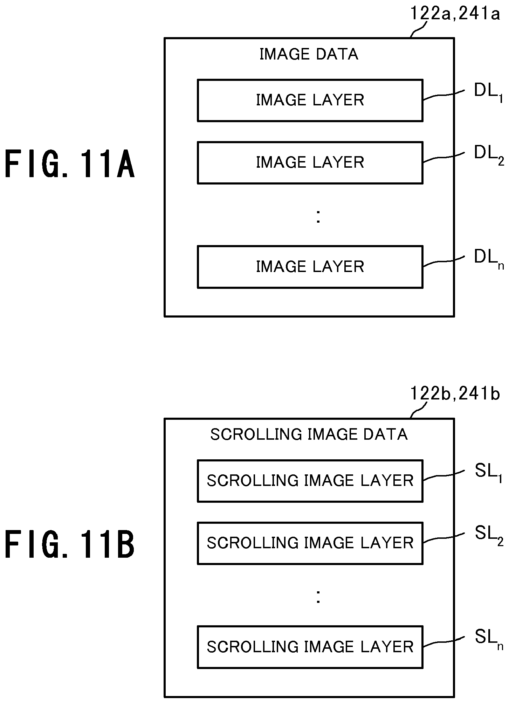

FIG. 11A shows the structure of image data 122a/241a stored in the equipment management device 10 and display terminal 20. The image data 122a/241a are constructed to comprise multiple image layers DL₁ to DLₙ. The image presented by the image data 122a/241a is an image of the superimposed image layers DL₁ to DLₙ.

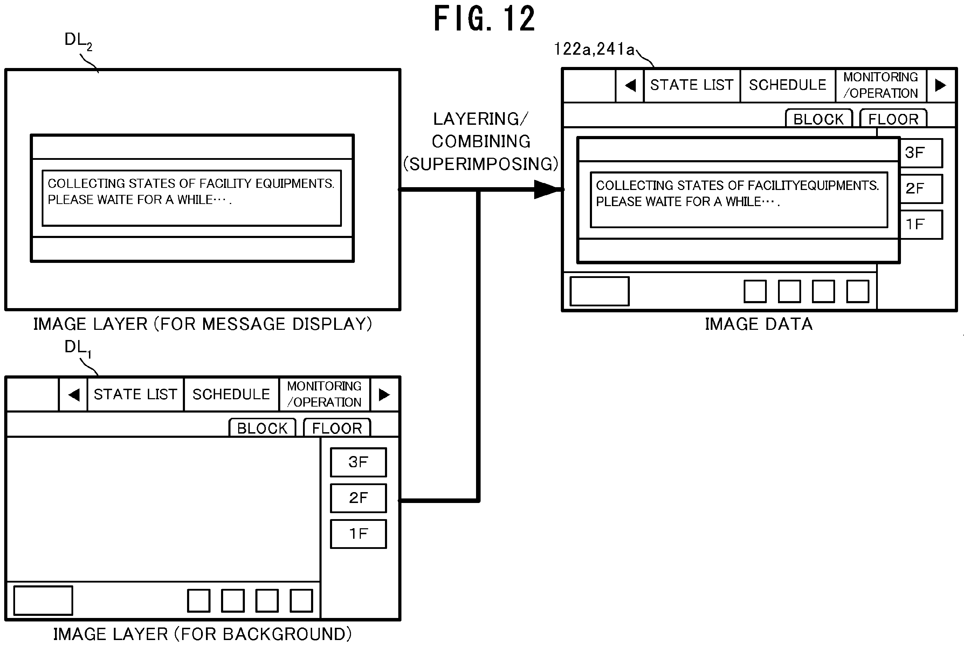

Here, the relationship between the image data 122a/241a and image layers DL is specifically explained using FIG. 12. As shown in the figure, the image data 122a/241a of a message-displaying image layer DL₂ layered on and combined with (superimposed on) a background image layer DL₁ are created.

Subsequently, FIG. 11B shows the structure of scrolling image data 122b/241b stored in the equipment management device 10 and display terminal 20. The scrolling image data 122b/241b are constructed to comprise multiple image layers SL₁ to SLₙ. The image presented by the scrolling image data 122b/241b is an image of the superimposed scrolling image layers SL₁ to SLₙ.

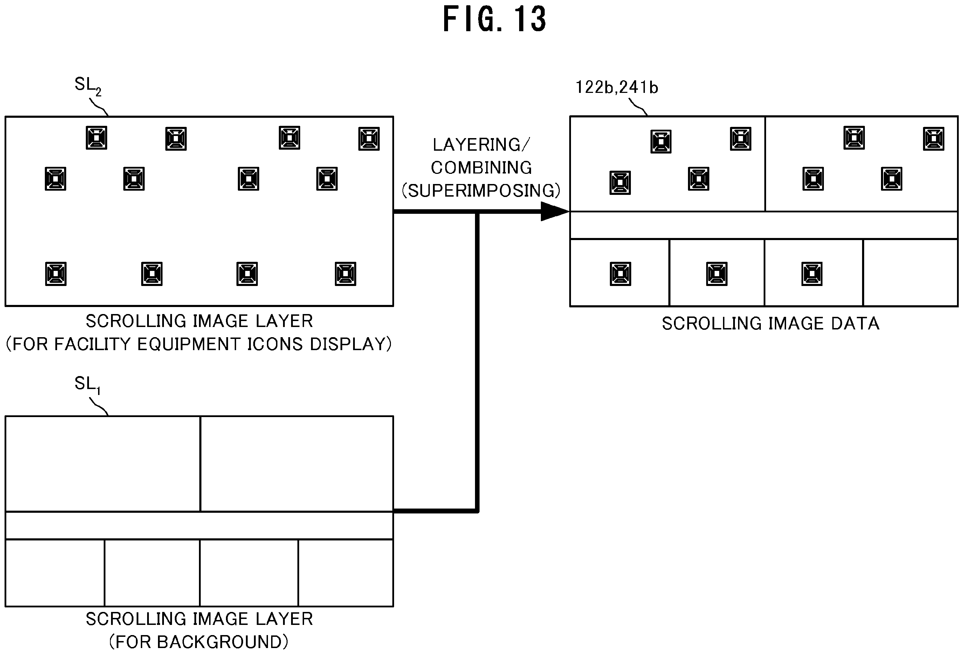

Here, the relationship between the scrolling image data 122b/241b and scrolling image layers SL is specifically explained using FIG. 13. As shown in the figure, the scrolling image data 122b/241b of a facility equipment icons-displaying image layer DL₂ layered on and combined with (superimposed on) a background scrolling image layer SL₁ are created.

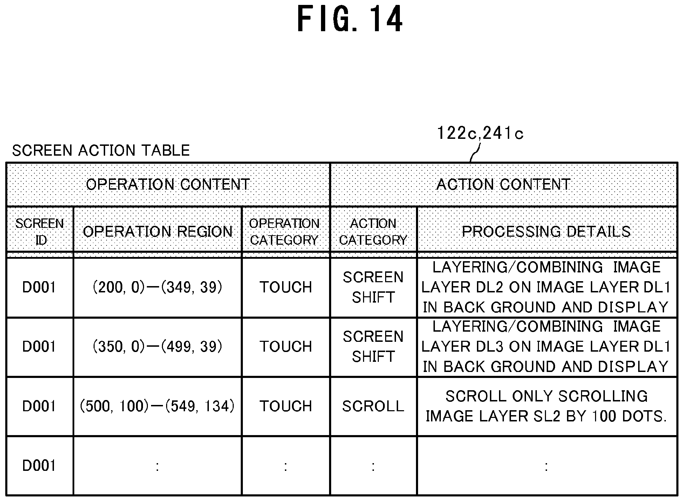

Furthermore, in this embodiment, as shown in FIG. 14, it is possible to define an action corresponding to an operation content in the screen action table 122c/241c on the basis of image layer DL or scrolling image layer SL. For example, it is known from the first entry in the screen action table 122c/241c shown in FIG. 14 that as a region ((200, 0) to (349, 39)) on the management screen is touched, the screen is shifted to an image of the image layer DL₂ layered on and combined with the background image layer DL₁.

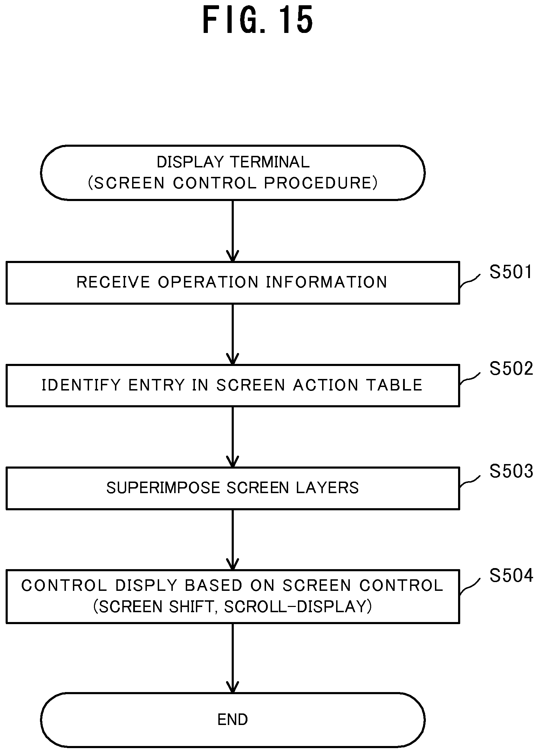

The screen control procedure to display a management screen created by layering and combining as the user conducts an operation on the displayed management screen via the inputter 22 of the display terminal 20 will be described hereafter with reference to the flowchart of FIG. 15.

Receiving operation information from the inputter 22 upon operation by the user (Step S501), the screen display controller 232 of the display terminal 20 identifies an entry in the corresponding screen action table 241c based on the position coordinates and operation type presented by the operation information (Step S502). For example, when the screen action table 241c corresponding to the displayed management screen is constructed as shown in FIG. 14 and operation information presenting a touch on a position (300, 10) is received from the inputter 22, the screen display controller 232 identifies the first entry.

Subsequently, the screen display controller 232 creates image data 241a (or scrolling image data 241b) of the layer images DL (or scrolling layer images SL) layered and combined based on the processing details of the identified entry (Step S503). For example, when the first entry in the screen action table 241c shown in FIG. 14 is identified, the screen display controller 232 creates screen data of an image layer 2 layered on and combined with an image layer 1 in the background.

Subsequently, the screen display controller 232 displays the screen data created by layering and combining based on the action category of the identified entry (Step S504). For example, the screen display controller 232 switches the display 21 so that the management screen based on the image data 241a of the layered and combined image layers DL₁ and DL₁ is displayed.

As described above, in the equipment management system according to Embodiment 2 of the present disclosure, the image data for a management screen are created and displayed by superimposing multiple image layers. Therefore, for example, for displaying a message window and then hiding it again, there is no need of transmission/reception of the screen image between the display terminal 20 and equipment management device 10, whereby a high speed screen switching is available.

Furthermore, in the equipment management system according to Embodiment 2 of the present disclosure, a set of scrolling image data is created and displayed by superimposing multiple image layers. Therefore, for example, scrolling actions such as scrolling only the facility equipment icons without scrolling the background is available without necessity of transmission/reception of the screen image between the display terminal 20 and equipment management device 10, whereby a high speed scrolling display is available.

Furthermore, multiple image layers for displaying caption are saved on the basis of language apart from a background image layer. Then, display of the caption corresponding to each language can easily be switched by specifying the display/hide of the image layer in the screen action table 241c.

Furthermore, with a background layer and facility equipment icons layer being created separately, the equipment management device 10 can update and transmit to the display terminal 20 only the facility equipment icons layer when the states of some facility equipments have changed and the management screen has to be updated. In this way, the portions other than the facility equipment icons are in the same color (transparent color) and highly compressible, whereby the workload regarding communication can be reduced.

### <<Embodiment 3>>

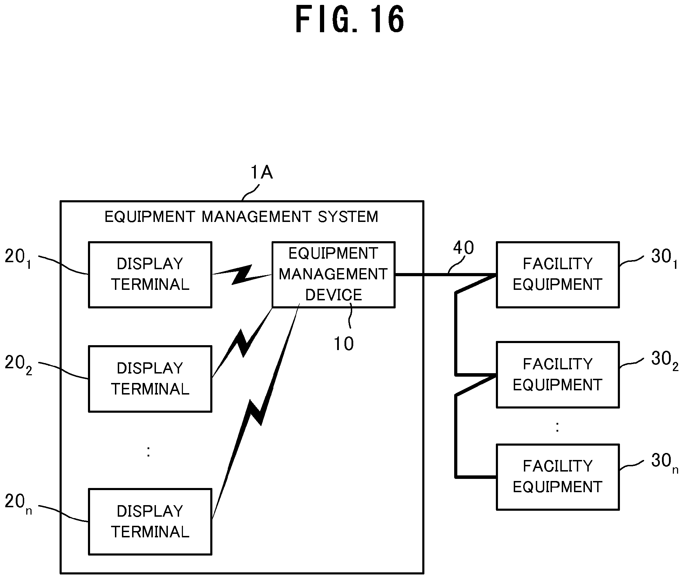

An equipment management system 1A according to Embodiment 3 of the present disclosure will be described hereafter. The equipment management system 1A according to Embodiment 3 of the present disclosure is different from the equipment management system 1 according to Embodiment 1 in that multiple display terminals 20₁ to 20ₙ are provided as shown in FIG. 16. Here, substantially the same components as those of the equipment management device 10 and display terminal 20 according to Embodiment 1 are referred to by the same reference numbers and their explanation is omitted as appropriate.

A common multicast address is set on the equipment management device 10 and multiple display devices 20₁ to 20ₙ. Therefore, the equipment management device 10 can transmit updated image data 122a to the display devices 20₁ to 20ₙ at a time (multicast transmission) through wireless communication.

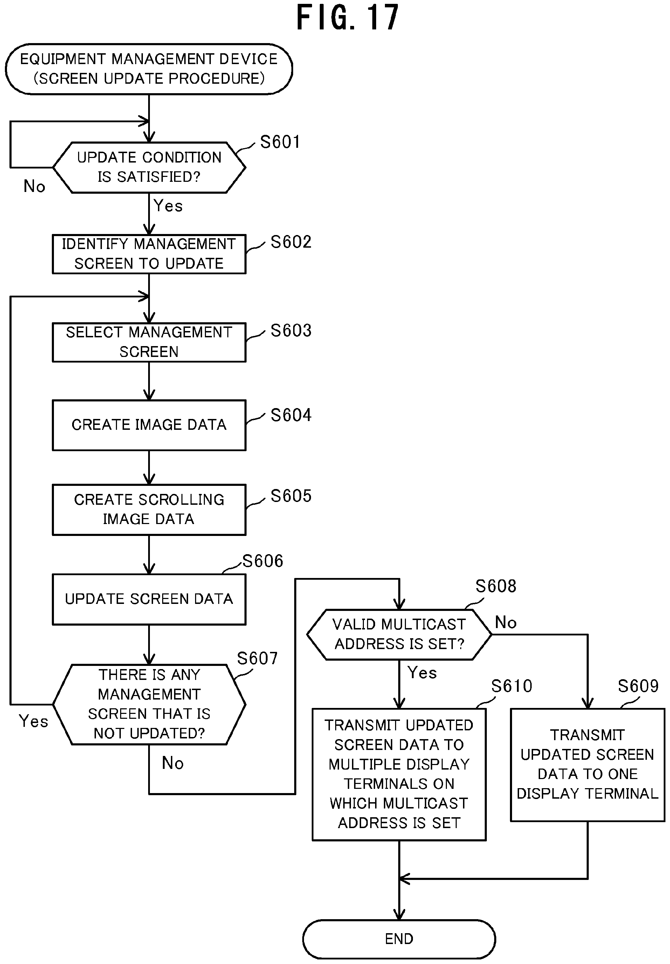

The screen update procedure executed by the equipment management device 10 when some screen data have to be updated will be described hereafter using the flowchart of FIG. 17.

The processing of Steps S601 to S607 to update the contents of the screen data 122 for a management screen that has to be updated when a given update condition is satisfied is substantially the same as the processing of Steps S201 to S207 in the screen update procedure described with the flowchart of FIG. 8.

If there is no management screen of which the screen data 122a is not updated in the Step S607 (Step S607; No), the screen data update manager 112 determines whether its own set multicast address is valid (Step S608).

If not valid (Step S608; No), multicast transmission is not available and the screen data update manager 112 transmits the screen data 122 updated in the Step S606 to a specific display terminal 20 (for example, the display terminal 20 owned by the chief supervisor) (Step S609).

If valid (Step S608; Yes), the screen data update manager 112 simultaneously transmits the screen data 122 updated in the Step S606 to the multiple display terminals 20₁ to 20ₙ on which the multicast address is set at a time (multicast). Then, the screen update procedure ends (Step S610).

Incidentally, in this embodiment, a multicast address is used to realize simultaneous transmission of the screen data 122a to multiple display terminals 20₁ to 20ₙ. However, use of a multicast address is not essential. For example, a broadcast address system enabling multiple display terminals to receive at a single transmission can be used.

As described above in detail, the equipment management system 1A according to Embodiment 3 of the present disclosure enables simultaneous transmission of the screen data to multiple display terminals 20 at a time without increasing the transmission processing load of the equipment management device 10. Therefore, the facility equipments 30 can easily be monitored from multiple sites without lowering the performance of the equipment management device 10.

Furthermore, the display terminals 20 bear a low processing load and then can be manufactured with a low-cost CPU. In the case of monitoring and operation from multiple sites being desired, an equipment management system can be configured at low cost in comparison with use of conventional personal computers or tablets.

Incidentally, the present disclosure is not confined to the above-described embodiments and drawings. Needless to say, the embodiments and drawings can be modified to the extent that the gist of the present disclosure is not changed.

For example, the display terminal 20 can be an existing smart phone, PDA (personal digital assistant), or the like.

Furthermore, it is possible to apply the action programs defining the actions of the equipment management device according to the present disclosure to an existing personal computer, information terminal device, or the like to make the personal computer or the like function as the equipment management device according to the present disclosure.

The above programs can be distributed by any method and, for example, can be saved and distributed on a computer-readable recording medium such as a CD-ROM (compact disk read-only memory), DVD (digital versatile disk), MO (magneto optical disk), and memory card, or distributed via a communication network such as the Internet.

Various embodiments and modifications are available to the present disclosure without departing from the scope of the present disclosure. The above-described embodiments are given for explaining the present disclosure and do not confine the scope of the present disclosure. In other words, the scope of the present disclosure is set forth by the scope of claims, not by the embodiments. Various modifications made within the scope of claims and scope of significance of the disclosure equivalent thereto are considered to fall under the scope of the present disclosure.

### Industrial Applicability

The present disclosure is preferably used with an equipment management device managing facility equipments installed in a building or the like.

### Reference Signs List

- 10: Equipment management device

- 11: Controller
- 111: Facility equipment manager
- 112: Screen data update manager
- 113: Image creator
- 114: Screen action table creator
- 12: Data storage
- 121: Facility equipment data
- 121a: Connection information
- 121b: Operation state data
- 122: Screen data
- 122a: Image data
- 122b: Scrolling image data
- 122c: Screen action table
- 123: Screen metadata
- 13: Display terminal communicator
- 14: Facility equipment communicator
- 20: Display terminal
- 30: Facility equipment
- 40: Dedicated line

## Claims

1. An equipment management device (10) managing facility equipments (30) installed in a facility, **characterized by** comprising:
a screen storage (12) storing screen data (122) for each screen for managing the facility equipments (30), the screen data (122) comprising image data (122a, 122b) of images to be displayed on a management screen and a screen action table (122c) that associates a particular region of the management screen, content of an operation accepted from the particular region and content of an action when the management screen is operated; and
a screen transmitter (112) transmitting the screen data (122) corresponding to each of the management screens to a display terminal (20).

2. The equipment management device (10) according to Claim 1, **characterized by** comprising:
a screen updater (112) updating the screen data (122); and
an update image transmitter (112) transmitting the screen data updated by the screen updater (112) to the display terminal (20).

3. The equipment management device (10) according to Claim 2, **characterized by** comprising
an update screen specifier (112) specifying management screens that are required to be updated due to a change when an operating condition of the facility equipments (30) is changed, wherein
the screen updater (112) updates screen data (122) on management screens specified by the update screen specifier (112).

4. The equipment management device (10) according to any one of Claims 1 to 3, **characterized in that**
the screen action table (122c) associates a particular region of the management screen, content of an operation accepted from the particular region and content of a screen shift action when the management screen are operated.

5. The equipment management device (10) according to any one of Claims 1 to 3, **characterized in that**
the management screen is combined screen of images of each layer.

6. The equipment management device (10) according to any one of Claims 1 to 5, **characterized in that**
the image data (122a, 122b) of images to be displayed on the management screen contains scrolling image data (122b) of a scroll image for displaying within a scroll region on the management screen, and
the screen action table (122c) is information associating a particular region of the management screen, content of an operation accepted from the particular region and content of a scroll action of the scroll image when the management screen are operated.

7. The equipment management device (10) according to Claim 6, **characterized in that**
the scrolling image is a combined image of images of each layer.

8. The equipment management device (10) according to any one of Claims 1 to 7, **characterized in that**
the screen transmitter (112) transmits the screen data (122) corresponding to the management screens to multiple display terminals (20) at a time.

9. An equipment management method managing facility equipments (30) installed in a facility, **characterized in that**:
storing screen data (122) for each screen for managing the facility equipments (30), the screen data (122) comprising image data (122a, 122b) of images to be displayed on a management screen and a screen action table (122c) that associates a particular region of the management screen, content of an operation accepted from the particular region and content of an action when the management screen is operated;
and
transmitting the screen data (122) corresponding to each of the management screens to a display terminal (20).

10. A program allowing a computer managing facility equipments (30) installed in a facility to function as:
a screen storage (12) storing screen data (122) for each screen for managing the facility equipments (30), the screen data (122) comprising image data (122a, 122b) of images to be displayed on a management screen and a screen action table (122c) that associates a particular region of the management screen, content of an operation accepted from the particular region and content of an action when the management screen is operated;
and
a screen transmitter (112) transmitting the screen data (122) corresponding to each of the management screens to a display terminal (20).

11. An equipment management system (1) comprising an equipment management device (10) managing facility equipments (30) installed in a facility and a display terminal (20), **characterized in that**
the equipment management device (10) comprises:
a screen storage (12) storing screen data (122) for each screen for managing the facility equipments (30), the screen data (122) comprising image data (122a, 122b) of images to be displayed on a management screen and a screen action table (122c) that associates a particular region of the management screen, content of an operation accepted from the particular region and content of an action when the management screen is operated;
and
a screen transmitter (112) transmitting the screen data (122) corresponding to each of the management screens to the display terminal (20)
and
the display terminal (20) comprises:
a communicator (25) conducting data communication with the equipment management device (10);
a data storage (24) storing the screen data (241) transmitted from the equipment management device (10) for each of the management screens;
a management screen display (21) displaying the management screens based on image data (241a, 241b) contained in the screen data (241) stored in the data storage (24); and
a display controller (232) executing an action corresponding to an operation accepted from the management screen displayed by the management screen display (21) based on the screen action table (241c) contained in the screen data (241) stored in the data storage (24).

## Patentansprüche

1. Ausrüstungsverwaltungsgerät (10), verwaltend Anlagenausrüstungen (30), die in einer Anlage installiert sind, **dadurch gekennzeichnet, dass** es umfasst:
einen Bildschirmspeicher (12), speichernd Bildschirmdaten (122) für jeden Bildschirm zum Verwalten der Anlagenausrüstungen (30), wobei die Bildschirmdaten (122) Bilddaten (122a, 122b) von auf einem Verwaltungsbildschirm anzuzeigenden Bildern und eine Bildschirmaktionstabelle (122c) umfassen, die einen bestimmten Bereich des Verwaltungsbildschirms, Inhalt eines aus dem bestimmten Bereich akzeptierten Betriebs und Inhalt einer Aktion, wenn der Verwaltungsbildschirm betätigt wird, assoziiert; und
einen Bildschirmübertrager (112), übertragend die jedem der Verwaltungsbildschirme entsprechenden Bildschirmdaten (122) an ein Anzeigeendgerät (20).

2. Ausrüstungsverwaltungsgerät (10) nach Anspruch 1, **dadurch gekennzeichnet, dass** es umfasst:
einen Bildschirmaktualisierer (112), aktualisierend die Bildschirmdaten (122); und
einen Aktualisierungsbildübertrager (112), übertragend die durch den Bildschirmaktualisierer (112) aktualisierten Bildschirmdaten an das Anzeigeendgerät (20).

3. Ausrüstungsverwaltungsgerät (10) nach Anspruch 2, **dadurch gekennzeichnet, dass** es umfasst:
einen Aktualisierungsbildschirmspezifizierer (112), spezifizierend Verwaltungsbildschirme, die aufgrund von einer Änderung, wenn ein Betriebszustand der Anlagenausrüstungen (30) geändert wird, aktualisiert werden müssen, wobei
der Bildschirmaktualisierer (112) Bildschirmdaten (122) auf Verwaltungsbildschirmen, die durch den Aktualisierungsbildschirmspezifizierer (112) spezifiziert sind, aktualisiert.

4. Ausrüstungsverwaltungsgerät (10) nach einem der Ansprüche 1 bis 3, **dadurch gekennzeichnet, dass**
die Bildschirmaktionstabelle (122c) einen bestimmten Bereich des Verwaltungsbildschirms, Inhalt eines aus dem bestimmten Bereich akzeptierten Betriebs und Inhalt von einer Bildschirmverschiebungsaktion assoziiert, wenn der Verwaltungsbildschirm betätigt werden.

5. Ausrüstungsverwaltungsgerät (10) nach einem der Ansprüche 1 bis 3, **dadurch gekennzeichnet, dass**
der Verwaltungsbildschirm kombinierter Bildschirm aus Bildern von jeder Schicht ist.

6. Ausrüstungsverwaltungsgerät (10) nach einem der Ansprüche 1 bis 5, **dadurch gekennzeichnet, dass**
die Bilddaten (122a, 122b) von auf dem Verwaltungsbildschirm anzuzeigenden Bildern Scroll-Bilddaten (122b) eines Scroll-Bilds zum Anzeigen innerhalb eines Scroll-Bereichs auf dem Verwaltungsbildschirm umfassen, und
die Bildschirmaktionstabelle (122c) Information ist, assoziierend einen bestimmten Bereich des Verwaltungsbildschirms, Inhalt eines aus dem bestimmten Bereich akzeptierten Betriebs und Inhalt einer Scroll-Aktion des Scroll-Bilds, wenn der Verwaltungsbildschirm betätigt werden.

7. Ausrüstungsverwaltungsgerät (10) nach Anspruch 6, **dadurch gekennzeichnet, dass**
das Scroll-Bild ein kombiniertes Bild aus Bildern von jeder Schicht ist.

8. Ausrüstungsverwaltungsgerät (10) nach einem der Ansprüche 1 bis 7, **dadurch gekennzeichnet, dass**
der Bildschirmübertrager (112) die den Verwaltungsbildschirmen entsprechenden Bildschirmdaten (122) an mehrere Anzeigeendgeräte (20) gleichzeitig überträgt.

9. Ausrüstungsverwaltungsverfahren, verwaltend Anlagenausrüstungen (30), die in einer Anlage installiert sind, **gekennzeichnet durch**:
Speichern von Bildschirmdaten (122) für jeden Bildschirm zum Verwalten der Anlagenausrüstungen (30), wobei die Bildschirmdaten (122) Bilddaten (122a, 122b) von Bildern, die auf einem Verwaltungsbildschirm anzuzeigen sind, und eine Bildschirmaktionstabelle (122c) umfassen, die einen bestimmten Bereich des Verwaltungsbildschirms, Inhalt eines aus dem bestimmten Bereich akzeptierten Betriebs und Inhalt einer Aktion, wenn der Verwaltungsbildschirm betätigt wird, assoziiert;
und
Übertragen der jedem der Verwaltungsbildschirme entsprechenden Bildschirmdaten (122) an ein Anzeigeendgerät (20).

10. Programm, das einem Computer, verwaltend Anlagenausrüstungen (30), die in einer Anlage installiert sind, ermöglicht, zu funktionieren als:
ein Bildschirmspeicher (12), speichernd Bildschirmdaten (122) für jeden Bildschirm zum Verwalten der Anlagenausrüstungen (30), wobei die Bildschirmdaten (30) Bilddaten (122a, 122b) der Bilder, die auf einem Verwaltungsbildschirm anzuzeigen sind, und eine Bildschirmaktionstabelle (122c) umfassen, die einen bestimmten Bereich des Verwaltungsbildschirms, Inhalt eines aus dem bestimmten Bereich akzeptierten Betriebs und Inhalt einer Aktion, wenn der Verwaltungsbildschirm betrieben wird, assoziiert;
und
einen Bildschirmübertrager (112), übertragend die jedem der Verwaltungsbildschirme entsprechenden Bildschirmdaten (122) an ein Anzeigeendgerät (20).

11. Ausrüstungsverwaltungssystem (1), umfassend ein Ausrüstungsverwaltungsgerät (10), verwaltend Anlagenausrüstungen (30), die in einer Anlage installiert sind, und ein Anzeigeendgerät (20), **dadurch gekennzeichnet, dass**
das Ausrüstungsverwaltungsgerät (10) umfasst:
einen Bildschirmspeicher (12), speichernd Bildschirmdaten (122) für jeden Bildschirm zum Verwalten der Anlagenausrüstungen (30), wobei die Bildschirmdaten (122) Bilddaten (122a, 122b) von Bildern, die auf einem Verwaltungsbildschirm anzuzeigen sind, und eine Bildschirmaktionstabelle (122c) umfassen, die einen bestimmten Bereich des Verwaltungsbildschirms, Inhalt eines von dem bestimmten Bereich akzeptierten Betriebs, und Inhalt einer Aktion, wenn der Verwaltungsbildschirm betätigt wird, assoziiert;
und
einen Bildschirmübertrager (112), übertragend die jedem der Verwaltungsbildschirme entsprechenden Bildschirmdaten (122) an das Anzeigeendgerät (20),
und
wobei das Anzeigeendgerät (20) umfasst:
einen Kommunikator (25), durchführend Datenkommunikation mit dem Ausrüstungsverwaltungsgerät (10);
einen Datenspeicher (10), speichernd die Bildschirmdaten (241), die von dem Ausrüstungsverwaltungsgerät (10) übertragen werden, für jeden der Verwaltungsbildschirme;
eine Verwaltungsbildschirmanzeige (21), anzeigend die Verwaltungsbildschirme auf Grundlage von Bilddaten (241a, 241b), die in den im Datenspeicher (24) gespeicherten Bildschirmdaten (241) enthalten sind, und
eine Anzeigesteuerung (232), ausführend eine Aktion entsprechend einem Betrieb, der aus dem Verwaltungsbildschirm akzeptiert wurde, der durch die Verwaltungsbildschirmanzeige (21) angezeigt wurde auf Grundlage der Bildschirmaktionstabelle (241c), die in den im Datenspeicher (24) gespeicherten Bildschirmdaten (241) enthalten ist.

## Revendications

1. Dispositif de gestion de matériel (10) qui gère des matériels d'une installation (30) installés dans une installation, **caractérisé par le fait qu'**il comprend :
un stockage d'écran (12) qui stocke des données d'écran (122) de chaque écran destiné à gérer les matériels de l'installation (30), les données d'écran (122) comprenant des données d'image (122a, 122b) des images à afficher sur un écran de gestion, et une table d'action d'écran (122c) qui associe une région particulière de l'écran de gestion, le contenu d'une opération acceptée à partir de la région particulière et du contenu d'une action, lorsque l'écran de gestion est actionné ; et
un émetteur d'écran (112) qui transmet les données d'écran (122) qui correspondent à chacun des écrans de gestion, à un terminal d'affichage (20).

2. Dispositif de gestion de matériel (10) selon la revendication 1, **caractérisé par le fait qu'**il comprend :
un dispositif de mise à jour d'écran (112) qui met à jour les données d'écran (122) ; et
un émetteur d'image de mise à jour (112) qui transmet les données d'écran mises à jour par le dispositif de mise à jour d'écran (112), au terminal d'affichage (20).

3. Dispositif de gestion de matériel (10) selon la revendication 2, **caractérisé par le fait qu'**il comprend :
un dispositif de spécification d'écran de mise à jour (112) qui spécifie les écrans de gestion qui doivent être mis à jour suite à une modification, quand une condition de fonctionnement des matériels de l'installation (30) est modifiée, dans lequel :
le dispositif de mise à jour d'écran (112) met à jour les données d'écran (122) sur les écrans de gestion spécifiés par le dispositif de spécification d'écran de mise à jour (112).

4. Dispositif de gestion de matériel (10) selon l'une quelconque des revendications 1 à 3, **caractérisé en ce que** :
la table d'action d'écran (122c) associe une région particulière de l'écran de gestion, le contenu d'une opération acceptée à partir de la région particulière et du contenu d'une action de changement d'écran, lorsque l'écran de gestion est actionné.

5. Dispositif de gestion de matériel (10) selon l'une quelconque des revendications 1 à 3, **caractérisé en ce que** :
l'écran de gestion est un écran combiné d'images de chaque couche.

6. Dispositif de gestion de matériel (10) selon l'une quelconque des revendications 1 à 5, **caractérisé en ce que** :
les données d'image (122a, 122b) des images à afficher sur l'écran de gestion, contiennent des données d'image de défilement (122b) d'une image de défilement à afficher dans une région de défilement sur l'écran de gestion ; et
la table d'action d'écran (122c) est une information qui associe une région particulière de l'écran de gestion, le contenu d'une opération acceptée à partir de la région particulière et du contenu d'une action de défilement de l'image de défilement, lorsque l'écran de gestion est actionné.

7. Dispositif de gestion de matériel (10) selon la revendication 6, **caractérisé en ce que** :
l'image de défilement est une image combinée d'images de chaque couche.

8. Dispositif de gestion de matériel (10) selon l'une quelconque des revendications 1 à 7, **caractérisé en ce que** :
l'émetteur d'écran (112) transmet les données d'écran (122) qui correspondent aux écrans de gestion, à de multiples terminaux d'affichage (20) à la fois.

9. Procédé de gestion de matériel destiné à gérer des matériels d'une installation (30) installés dans une installation, **caractérisé par** les étapes consistant à :
stocker des données d'écran (122) de chaque écran destiné à gérer les matériels de l'installation (30), les données d'écran (122) comprenant des données d'image (122a, 122b) des images à afficher sur un écran de gestion, et une table d'action d'écran (122c) qui associe une région particulière de l'écran de gestion, le contenu d'une opération acceptée à partir de la région particulière et du contenu d'une action, lorsque l'écran de gestion est actionné ; et
transmettre les données d'écran (122) qui correspondent à chacun des écrans de gestion, à un terminal d'affichage (20).

10. Programme qui permet à un ordinateur qui gère les matériels d'une installation (30) installés dans une installation, de fonctionner en tant que :
stockage d'écran (12) qui stocke des données d'écran (122) de chaque écran destiné à gérer les matériels de l'installation (30), les données d'écran (122) comprenant des données d'image (122a, 122b) des images à afficher sur un écran de gestion, et une table d'action d'écran (122c) qui associe une région particulière de l'écran de gestion, le contenu d'une opération acceptée à partir de la région particulière et du contenu d'une action, lorsque l'écran de gestion est actionné ; et
émetteur d'écran (112) qui transmet les données d'écran (122) qui correspondent à chacun des écrans de gestion, à un terminal d'affichage (20).

11. Système de gestion de matériel (1) qui comprend un dispositif de gestion de matériel (10) qui gère les matériels d'une installation (30) installés dans une installation, et un terminal d'affichage (20), **caractérisé en ce que** :
le dispositif de gestion de matériel (10) comprend :
un stockage d'écran (12) qui stocke des données d'écran (122) de chaque écran destiné à gérer les matériels de l'installation (30), les données d'écran (122) comprenant des données d'image (122a, 122b) des images à afficher sur un écran de gestion, et une table d'action d'écran (122c) qui associe une région particulière de l'écran de gestion, le contenu d'une opération acceptée à partir de la région particulière et du contenu d'une action, lorsque l'écran de gestion est actionné ; et
un émetteur d'écran (112) qui transmet les données d'écran (122) qui correspondent à chacun des écrans de gestion, au terminal d'affichage (20) ; et
le terminal d'affichage (20) comprend :
un dispositif de communication (25) qui exécute une communication de données avec le dispositif de gestion de matériel (10) ;
un stockage de données (24) qui stocke les données d'écran (241) de chacun des écrans de gestion, transmises à partir du dispositif de gestion de matériel (10) ;
un affichage d'écran de gestion (21) qui affiche les écrans de gestion sur la base des données d'image (241a, 241b) contenues dans les données d'écran (241) stockées dans le stockage de données (24) ; et
un contrôleur d'affichage (232) qui exécute une action qui correspond à une opération acceptée en provenance de l'écran de gestion qu'affiche l'affichage d'écran de gestion (21) sur la base de la table d'action d'écran (241c) contenue dans les données d'écran (241) stockées dans le stockage de données (24).
